# EUROPEAN PATENT APPLICATION

(11) **EP 3 902 145 A1**
(43) Date of publication of application: **27.10.2021**
(21) Application number: 20170692.6
(22) Date of filing: 21.04.2020
(51) Int. Cl.: H04B 1/16, H04W 52/02, G06K 19/07

(54) **RADIOFREQUENCY DEVICE WITH WAKE-UP CIRCUIT**

(71) Applicant: TeleAlarm SA, 2300 La Chaux-de-Fonds (CH)
(72) Inventor: Cariou, Laurent, 2300 La Chaux-de-Fonds (CH); Grandjean, Frédéric, 2300 La Chaux-de-Fonds (CH)
(74) Representative: WBH Wachenhausen Patentanwälte PartG mbB

(57) **Abstract**

The present invention discloses a radiofrequency device with wake-up circuit. The device comprises a main antenna for receiving radiofrequency signals, a microcontroller connected to the main antenna which is adapted to communicate via the main antenna, an electrical conductor mutually coupled to the main antenna, and a wake-up circuit which is adapted to receive signals via the electrical conductor, wherein the wake-up circuit is further adapted to send a wake-up signal to the microcontroller for waking up the microcontroller.

## Description

### Technical field

The present invention relates a radiofrequency device with a wake-up circuit, especially a configuration with a zero current consumption circuit for microcontroller wake-up function.

### Background

Radiofrequency devices according to the state of the art are sometimes provided with a wake-up function so that the radiofrequency device is activated based on receiving a radio frequency signal from an external device. For this purpose, a detection circuit is usually directly hard coupled to the main antenna of said device. The detection circuit is then used for activating the radiofrequency device based on a received radio frequency signal. However, this results in a non-optimum matching and a poor sensitivity for a radio frequency function. Further, if the main microcontroller is used to implement the detection circuit, the power consumption of said microcontroller is often at least a few microamperes leading to a reduced standby time of the radiofrequency device.

Further, if a simple resonance circuit consisting of an inductor and a capacitor is used for implementing the wake-up functionality, such a configuration results in a poor range and a non-optimum detection of radio signals as no omnidirectional configuration is implemented.

### Summary

The present invention thus aims at providing a radiofrequency device with a wake-up functionality having improved detection capabilities as well as reduced power consumption.

The problem is solved by a radiofrequency device having the features of independent claim 1.

A radiofrequency device according to the present invention comprises a main antenna, a microcontroller, an electrical conductor, as well as a wake-up circuit which shall be described in detail in the following paragraphs.

The radiofrequency device is to be understood as any device which is able to receive a radio frequency communication, such as radio frequency signals, and preferably to also transmit the same to another entity. Hence, the radiofrequency device can also be described as a radio transceiver implemented for sending and receiving radio frequency communication, preferably, within a predefined wavelength range.

Such a radiofrequency device first comprises a main antenna for receiving radio frequency signals. The antenna may be any kind of antenna which may be used to receive or send radio waves, and which may be adapted to a specific wavelength or range. Such an antenna can for example be a 3D antenna or a printed circuit in the form of a printed antenna or even an antenna array. Further, the antenna may be an antenna having omnidirectional receiving and sending capabilities due to its specific structure.

The microcontroller connected to said main antenna is adapted to communicate via said main antenna. Hence, the microcontroller may be electrically coupled to the main antenna such that electronic signals may be received and sent via the main antenna. Such an electronic coupling may be a hard-wired connection.

The electrical conductor is a conductor which is mutually coupled to the main antenna. Such a mutual coupling may for example be a radio frequency coupling. Preferably meaning that there is no direct conduction path within the region of the radio frequency coupling, but the electrical conductor is galvanically isolated from the main antenna in said region. Energy or information can still be exchanged by means of the radio frequency coupling. The wording radio frequency coupling as used herein may for example be understood as any kind of coupling excluding a direct electronic connection, hard-wiring, of the two devices, as, for example, an inductive coupling, etc. The electronic conductor may be an electronic conductor such as a printed trace or similar but may also be a 3D structure which is e.g. adapted to the main antenna to which it is coupled.

As to achieve the mutual coupling, the electrical conductor and a part of the main antenna may be arranged in close proximity next to each other as to allow a coupling between the two elements. Further, the wake-up circuit of the radiofrequency device is adapted to receive signals via the electrical conductor. Hence, the wake-up circuit may be electrically coupled or connected to the electrical conductor, such that signals which are received by the main antenna are submitted to the electrical conductor via the mutual coupling of the two elements and are then in turn received by the wake-up circuit.

This wake-up circuit is in addition further adapted to send a wake-up signal to the microcontroller for waking up the microcontroller. Hence, the wake-up circuit may be adapted to generate an output signal based on a signal received via the main antenna via the electrical conductor and wherein the output signal is in turn received by the microcontroller and results in an activation, or waking up, of the microcontroller.

The microcontroller, after being activated, or woken up, may then perform usual sending and receiving operations via the main antenna via its electric coupling of the microcontroller to the main antenna. Here, a transceiver may further be provided between the microcontroller and the main antenna.

Hence, the microcontroller in turn may be adapted to receive the output signal of the wake-up circuit and to switch from an inactive state to an active state depending on the wake-up signal. The wording inactive state may be understood as to refer to a state in which the microcontroller does not listen or react to any radio signals on the main antenna but in which the output signal received from the wake-up circuit may result in activation of the microcontroller. The active state of the microcontroller in turn may be understood as a state in which sending and receiving operations via the main antenna may be performed by the microcontroller and in which the microcontroller listens for radio signals received via the main antenna.

Hence, by employing the above-described structure, a system may be provided in which the microcontroller can be transferred to a state with minimal power consumption, even zero current consumption, while maintaining the capability of waking up the microcontroller via an external radio frequency signal. Further, by using a coupling instead of a direct electric connection between the wake-up circuit and the main antenna, a negative impact on the radio frequency performance of the overall system due to the wake-up circuit may be avoided resulting in a better sending and receiving performance of the whole radiofrequency device. In addition, the wake-up signal may at the same time take advantage of the gain of the main antenna while avoiding the bad impact on the overall RF performance, described before.

In a further embodiment, the coupling between the electrical conductor and the main antenna may be a radio frequency coupling. Here, it is referred to the above description of the wording radio frequency coupling and to the benefits described above.

In a further embodiment, the electrical conductor may be a 3D element, preferably a short element. By using a 3D element, the coupling of the electrical conductor may be adapted to the structure of the main antenna in a preferential way. Further, by using a short element, the space needed for the electrical conductor may be minimized while having a preferred effect on the detection capabilities of the wake-up circuit since adapting the capabilities and specifications of the electrical conductor may be used to adapt the coupling parameters between the main antenna and the electrical conductor as to optimize the signal received by the wake-up circuit.

In one embodiment, the main antenna may be designed as an omnidirectional antenna. Using an omnidirectional antenna and coupling said omnidirectional to the electrical conductor allows the radiofrequency device to also take advantage of the beneficial capabilities of an omnidirectional antenna for the wake-up signal. In other words, if an omnidirectional antenna is used and coupled to the electrical conductor, the wake-up capabilities are optimized since wake-up signals may be received from any direction improving the wake-up function.

As stated above, in one embodiment, the mutual coupling of the electrical conductor to the main antenna is a galvanically isolated coupling. Hence, within the region of the coupling, a galvanic isolation is achieved. In other words, there is a galvanic isolation due to e.g a radiofrequency coupling. This does, however, not mean that there may not be a further electrical connection from the electrical conductor to the main antenna via other components as, for example, the microcontroller in another region than the region of the RF coupling. This can, as also described above, for example be achieved by placing the electrical conductor in short proximity to a part of the main antenna such that a mutual RF coupling between the elements is achieved while still having an isolation, i.e. a galvanic isolation, between the elements.

In one embodiment, the main antenna may be constructed as a 3D element. Hence, in other words, the main antenna may be a 3D antenna having a three-dimensional structure and which may be adapted to optimally send and receive specific radio frequencies from specific directions, depending on the specific radiofrequency device and its use case.

In another embodiment, the main antenna may be constructed as a 2D element, e.g. in the form of a printed antenna.

In a further embodiment, the main antenna may have a first and a second end wherein the first end of the antenna is connected, for example electrically connected, to the microcontroller while the other end of the main antenna is coupled, for example in a mutual way, to the above-described electrical conductor.

The above-described wake-up circuit may in turn comprise at least one diode, the diode may be coupled in a way as to minimize current flowing from the wake-up circuit in the direction of the electrical conductor.

In one further embodiment, the wake-up circuit may comprise additional elements. These elements may be an operational amplifier connected to the electric conductor and a comparator connected between the operational amplifier and the microcontroller. Here, the comparator is adapted to output a low signal or a high signal based on the radio frequency signal received from the main antenna via the electrical conductor and amplified by the operational amplifier.

Hence, in this embodiment, the signal received from the electrical conductor is first amplified by the operational amplifier. By feeding this amplified signal into the comparator, a clear low and high signal is generated which may be then fed into the microcontroller as a trigger signal to wake up the microcontroller as described above. Hence, by using said system, also low power signals may be used to activate the microcontroller while maintaining a very low power consumption since the comparator and the operational amplifier use only a very low standby power.

Overall, a small number of components is needed since also in this embodiment, the additional elements needed for providing the zero bias current RF circuit are limited to the trace, a diode, the operational amplifier and the comparator.

Further, in another embodiment, the radiofrequency device may be adapted to communicate with another radiofrequency device via the main antenna after having received the wake-up signal.

Hence, as described above, in an active state, the microcontroller may be adapted to send and receive signals via the main antenna.

### Brief description of the drawings

The disclosed embodiments have advantages and features, which will be more readily apparent from the detailed description, the dependent claims, and the accompanying figures and brief introduction of the Figures below.
Fig. 1 shows a radiofrequency device according to the present invention.
Fig. 2 shows an implementation of the wake-up circuit according to one aspect of the present invention.

### Detailed description

Details on the embodiments according to the present invention shall be described with regard to the figures below.

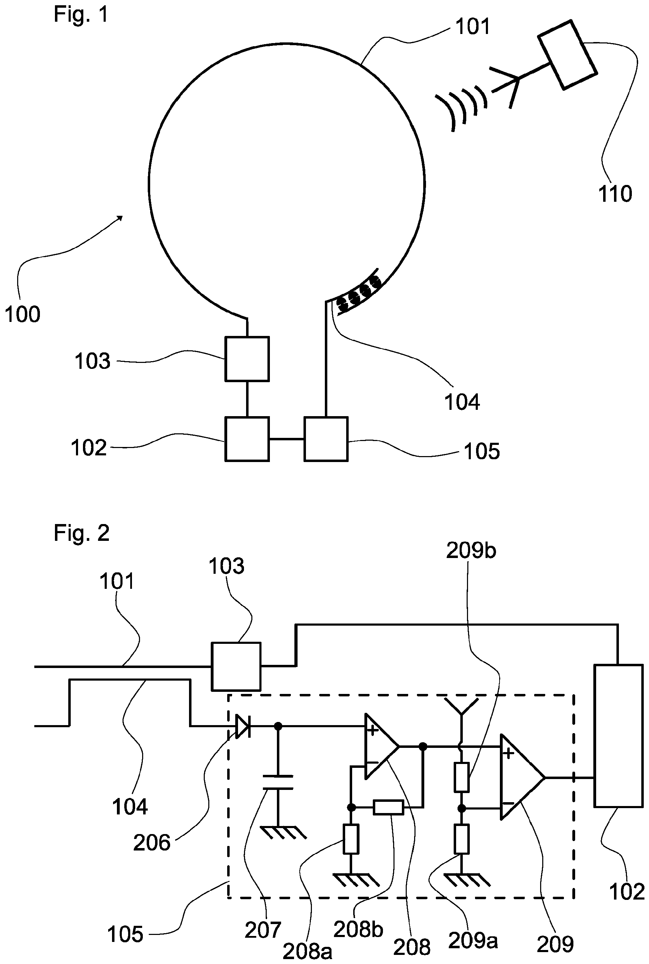

Fig. 1 shows a radiofrequency device according to the present invention. The radiofrequency device 100 according to the present invention first comprises a main antenna 101 which is, in this embodiment, constructed as a roundly bend omnidirectional antenna. This means that a radio wave transmitted by a second radiofrequency device 110 may be received with a high gain independent from the direction in which the second radiofrequency device 110 is located. A microcontroller 102 is electrically connected to a transceiver 103 which is in turn electrically coupled to one end of the omnidirectional main antenna 101. Hence, the microcontroller 102 may send and receive signals using the transceiver 103 via the main antenna 101. At the other end of the main antenna 101, opposite to the end at which the microcontroller 102 is connected to the main antenna, the electrical conductor 104 in form of the short trace is coupled to the main antenna 101. As shown by the left-right arrows between the electrical conductor 104 and the main antenna 101, the two elements are radio frequency coupled by placing the two elements in short proximity next to each other. Hence, a radio frequency signal received from the second radiofrequency device 110 by the omnidirectional main antenna 101 is transmitted via the mutual radio frequency coupling to the electrical conductor 104. The electrical conductor 104 is in turn connected to a wake-up circuit 105. The wake-up circuit 105 is arranged to submit a wake-up signal to the microcontroller 102 via the connection shown in the figure.

Hence, according to the embodiment shown in this figure, the omnidirectional properties of the main antenna 101 may be used to receive wake-up signals from external devices, such as the radiofrequency device 110 and to trigger a wake-up signal waking up the microcontroller 102 while avoiding bad impact on the main RF performance by using the mutual radio frequency coupling between the electrical conductor 104 and the main antenna 101 instead of a direct electric connection.

Once the microcontroller is woken up, it may perform sending and receiving operations via the transceiver 103 and may thus communicate, for example with the second radiofrequency device 110 using the main antenna 101.

With regard to Fig. 2, an implementation of the wake-up circuit 105 shall be described.

In the figure, the electrical conductor 104 which is mutually radio frequency coupled to the main antenna 101 is shown on the left-hand side. Further, as in the previous figure, the transceiver 103 connected to the microcontroller 102 is shown.

According to the implementation shown in Fig. 2, the wake-up circuit 105 comprises a diode 206, a capacitor 207, an operational amplifier 208 with its corresponding resistors 208a, 208b and connections as well as a comparator 209 with its corresponding resistors 209a, 209b and connections.

First, on the left-hand side, the anode of the diode 206 is connected to the electrical conductor 104. The cathode of the diode 206 is in turn connected to the amplifier 208 and a further capacitor 207 is connected between said units to ground. With the arrangement of the diode 206 and the capacitor 207 as shown in the figure, an RF detection is achieved. Hereby, the RF signal is rectified by the diode 206 and smoothed by the capacitor 207. Hence, the wake-up circuit 105 is configured to smoothly rectify an alternating voltage from the electrical conductor 204 to a direct voltage. The detected radio frequency signal is then amplified using the operational amplifier, the OP-AMP, 208 which produces an output potential that is larger than the potential at the input terminals. In the embodiment shown, the operation amplifier 208 is operated as a non-inverting closed-loop gain amplifier. Hereby, resistors 208a and 208b may be dimensioned such that the gain of the amplifier 208 may be adjusted appropriately to the requirements of the wake-up circuit 105. Hence, an amplified signal is then fed into the comparator 209. In the embodiment shown, the comparator is operated as a non-inverting comparator. Hereby, resistors 209a, 209b may be dimensioned such that a binary switching behaviour of the comparator 209 may be adjusted appropriately to the requirements of the wake-up circuit 105. With the comparator 209, a clear low and high signal may be achieved since the comparator 209 pulls the output signal either to ground or to high voltage. Hence, the comparator 209 then outputs the binary signal which is based on the fact whether a radio frequency signal is received on the electrical conductor 104 due to the mutual coupling with the main antenna 101. This signal is then fed into an input of the microcontroller 102.

The microcontroller 102 is configured to wake up if the high voltage is received at said input connected to the comparator 209.

Once in an active state, the microcontroller 102 can communicate via the transceiver 103 and the main antenna 101 with other external radiofrequency devices such as the second radiofrequency device 110 shown in Fig. 1.

Of course, as described above, the operational amplifier 208 and the comparator 209 may be omitted in some embodiments if the trigger power received via the electrical conductor 104 is high enough to trigger the microcontroller's wake-up. This in turn reduces costs of the overall system.

### Reference Signs

- 100: radiofrequency device
- 101: main antenna
- 102: microcontroller
- 103: transceiver
- 104: electrical conductor
- 105: wake-up circuit
- 110: second radiofrequency device
- 206: diode
- 207: capacitor
- 208: operational amplifier
- 208a, b: resistor
- 209: comparator
- 209a, b: resistor

## Claims

1. Radiofrequency device (100), comprising:
- a main antenna (101) for receiving radiofrequency signals;
- a microcontroller (102) connected to the main antenna (101) which is adapted to communicate via the main antenna (101);
- an electrical conductor (104) mutually coupled to the main antenna (101);
- a wake-up circuit (105) which is adapted to receive signals via the electrical conductor (104), wherein
- the wake-up circuit (105) is further adapted to send a wake-up signal to the microcontroller (102) for waking up the microcontroller (102).

2. Radiofrequency device (100) according to claim 1, wherein
- the coupling between the electrical conductor (104) and the main antenna (101) is a radio frequency coupling.

3. Radiofrequency device (100) according to any of the preceding claims, wherein
- the electrical conductor (104) is a 3D element, preferably a short element.

4. Radiofrequency device (100) according to any of the preceding claims, wherein
- the main antenna (101) is an omnidirectional antenna.

5. Radiofrequency device (100) according to any of the preceding claims, wherein
- the mutual coupling of the electrical conductor (104) to the main antenna (101) is a galvanically isolated coupling.

6. Radiofrequency device (100) according to any of the preceding claims, wherein
- the main antenna (101) is a 3D element.

7. Radiofrequency device (100) according to any of the preceding claims, wherein
- one end of the main antenna (101) is connected to the microcontroller (102) via a transceiver (103); and
- the other end of the main antenna (101) is coupled to the electrical conductor (104).

8. Radiofrequency device (100) according to any of the preceding claims, wherein the wake-up circuit (105) comprises a diode (206).

9. Radiofrequency device (100) according to any of the preceding claims, wherein the wake-up circuit (105) comprises:
- an operational amplifier (208) connected to the electrical conductor (104); and
- a comparator (209) connected between the operational amplifier (208) and the wake-up circuit (405); wherein
- the comparator (209) is adapted to output a low signal or a high signal based on the radio frequency signal received from the main antenna (101) via the electrical conductor (104) and amplified by the operational amplifier (208).

10. Radiofrequency device (100) according to any of the preceding claims, wherein
- the microcontroller (102) is adapted to communicate with another radiofrequency device (110) via the main antenna (102) after having received the wake-up signal.
